# EUROPÄISCHE PATENTSCHRIFT

(11) **EP 2 704 863 B1**
(45) Veröffentlichungstag und Bekanntmachung des Hinweises auf die Patenterteilung: **17.04.2019**
(21) Anmeldenummer: 11819060.2
(22) Anmeldetag: 12.12.2011
(51) Int. Cl.: B22F 3/105, C22C 26/00

(54) **VERFAHREN ZUR HERSTELLUNG EINES BAUTEILS**
METHOD FOR PRODUCING A COMPONENT
PROCÉDÉ DE FABRICATION D'UNE PIÈCE

(30) Priorität: 20.12.2010 DE 102010055201
(43) Veröffentlichungstag der Anmeldung: 12.03.2014
(73) Patentinhaber: Airbus Defence and Space GmbH, 85521 Ottobrunn (DE)
(72) Erfinder: BRANDL, Erhard, 85117 Eitensheim (DE); SANDER, Jörg, 89075 Ulm (DE); SCHOBERTH, Achim, 82024 Taufkirchen (DE)
(74) Vertreter: Kastel, Stefan
(86) Internationale Anmeldenummer: PCT/DE2011/002102
(87) Internationale Veröffentlichungsnummer: WO 2012/083922

(56) Entgegenhaltungen:
- EP-A1- 1 741 137
- US-A- 5 834 689
- US-A1- 2005 074 355
- S. VAUCHER ET AL: "Selective Laser Sintering of Aluminium-Silicon Carbide Metal Matrix Composites.", MATERIAL WEEK 2002, ICM MUNICH, 2. Oktober 2002 (2002-10-02), Seiten 1-8, XP55024712, ISBN: 3-88355-314-X
- WONG M ET AL: "Pressure loss and heat transfer through heat sinks produced by selective laser melting", HEAT TRANSFER ENGINEERING, HEMISPHERE PUB, WASHINGTON, DC, US, Bd. 30, Nr. 13, 1. November 2009 (2009-11-01), Seiten 1068-1076, XP008150615, ISSN: 0145-7632, DOI: 10.1080/01457630902922228 [gefunden am 2011-10-10]

## Beschreibung

### GEBIET DER ERFINDUNG

Die Erfindung betrifft ein Verfahren zum Herstellen eines Bauteils mit erhöhter Wärmeleitfähigkeit durch schichtweisen Aufbau und eines schichtweise aufgebauten Verbundwerkstoffes.

### HINTERGRUND DER ERFINDUNG

Viele industrielle, beispielsweise elektronische Komponenten und Prozesse erfordern während des Betriebs eine rasche und zuverlässige Abführung von Wärme, um eine Überhitzung und damit Beschädigung zu vermeiden oder den einwandfreien Betrieb der Komponente oder des Prozesses zu gewährleisten. Manche Komponenten oder Systeme von Komponenten, wie Laserkristalle oder in Satelliten verwendete Laser-Transmitter, erfordern eine extrem stabile Temperatur. Wenn eine Konvektionskühlung nicht möglich ist und eine Strahlungskühlung nicht ausreicht, muss die Wärme über die Wärmeleitung von geeigneten wärmeleitfähigen Materialien abgeführt werden.

Üblicherweise werden zum Abführen der Wärme Kühlkörper aus Legierungen auf der Basis der am besten wärmeleitenden Metalle, d.h. Kupfer (Cu), Silber (Ag) und Gold (Au), gefertigt. Diese Metalle haben eine Wärmeleitfähigkeit im Bereich von 350-400 W/mK. Die Dichte von Ag, Cu und Au ist jedoch vergleichsweise hoch, nämlich größer als 9 g/cm³, wodurch Kühlkörper aus diesen Metallen das Gesamtgewicht einer sie enthaltenden Vorrichtung deutlich erhöhen, was häufig unerwünscht ist. Legierungen auf Basis von Aluminium (Al) haben zwar eine deutlich geringere Dichte (etwa 2,7 g/cm³), aber auch eine geringere Wärmeleitfähigkeit bis maximal etwa 220 W/mK.

Es sind auch Metall-Diamant-Verbundwerkstoffe bekannt, die eine höhere Wärmeleitfähigkeit aufweisen als das zugrunde liegende Metall. Sie werden durch Flüssigmetall-Infiltration in das gesamte Pulverbett eines Diamantpulvers oder in gesamte Diamantpartikel-Vorformen hergestellt. Dabei wird zunächst das Metall, das sich auf der Vorform oder dem Pulverbett aus Diamant befindet, im Vakuum geschmolzen. Man lässt dann die Schmelze unter einem druckbeaufschlagten Gas das Pulverbett oder die Vorform infiltrieren. Auf diese Weise können jedoch nur Elemente mit einfacher und gewöhnlich flacher Geometrie wirtschaftlich gefertigt werden, da die mechanische Bearbeitung eines solchen Verbundwerkstoffs äußerst schwierig, zeitaufwändig und teuer ist.

Ferner ist es bekannt, ein Bauteil aus Metall oder einer Metalllegierung im schichtweisen Aufbau herzustellen (auch bekannt als generatives Herstellungsverfahren, Rapid Prototyping, Rapid Manufacturing oder Additive Layer Manufacturing (ALM)). Bei diesem Verfahren wird ein dreidimensionales CAD-Modell digital in dünne Schichten geschnitten; diese digitalen Daten werden in eine Steuervorrichtung eingespeist, die wiederum eine Wärmequelle sowie das Bereitstellen des Werkstoffpulvers steuert, aus dem das Bauteil Schicht für Schicht in endkonturnaher Form (auf Englisch "near net shape") aufgebaut wird. Das Grundprinzip des Aufbaus einer Schicht beruht auf einer kontinuierlichen lokalen Ablagerung von Metall oder einer Metalllegierung in Form von Pulver oder durch Abschmelzen von einem Draht oder Stab aus dem Metall oder der Metalllegierung, wobei das Metall oder die Metalllegierung durch eine bewegliche Wärmequelle (z.B. Laser- oder Elektronstrahl oder Lichtbogen) geschmolzen und anschließend wieder abgekühlt wird.

Verschiedene Formen des Auftragens einer Schicht mit Hilfe eines Pulverbetts sind dem Fachmann in englischer Sprache als Direct Metal Laser Sintering (DMLS), Selective Laser Sintering (SLS), Selective Electron Beam Melting (SEBM), LaserCusing oder Selective Laser Melting (SLM) bekannt. Das Auftragen einer Schicht durch Auftragschweißen mittels Pulverzufuhr ist dem Fachmann in englischer Sprache als Direct Metal Deposition (DMD), Laser Engineered Net Shaping (LENS), Laser Rapid Forming (LRF) oder Laser Cladding (LC) bekannt.

S. Vaucher et al.: "Selective Laser Sintering of Aluminium-Silicon Carbide Metal Matrix Composites.", Material Week 2002, ICM Munich, 2002-10-02, Seiten 1 bis 8 offenbart ein Verfahren mit den Merkmalen des Oberbegriffs von Anspruch 1. Dieses Verfahren wird unter Schutzgasatmosphäre, wie Stickstoff oder Argon, durchgeführt. Das damit gewonnene Material erfordert eine Nachverarbeitung, um die erforderliche Stabilität und Wärmeleitfähigkeit zu gewährleisten.

US 2005 / 0 074 355 A1 offenbart einen Metallmatrixverbundwerkstoff mit hoher Wärmeleitfähigkeit. Um die Wärmeleitfähigkeit zu erhöhen werden Diamantpartikel mit SiC beschichtet. Ebenso wie bei Vaucher et al. ist allerdings eine Nachverarbeitung erforderlich.

WO 2005 / 106 952 A1 offenbart eine Wärmesenke aus bohrhaltigem Diamant-Kupfer-Verbundwerkstoff. Durch Zugeben von Bor kann dabei die Anbindung der Diamantpartikel an das Kupfer verbessert werden, um die Wärmeleitfähigkeit zu erhöhen. Auch hierbei ist eine Nachverarbeitung, beispielsweise mittels Infiltration, erforderlich.

Die Aufgabe der Erfindung ist es, ein verbessertes und schnelleres Herstellverfahren für eine hochwärmeleitfähige Struktur in endkonturnaher Form zu schaffen.

### ZUSAMMENFASSUNG DER ERFINDUNG

Dies wird ermöglicht durch ein Verfahren zum Herstellen eines Bauteils mit erhöhter Wärmeleitfähigkeit durch schichtweisen Aufbau, das dadurch gekennzeichnet ist, dass zumindest ein Abschnitt des Bauteils durch zumindest einmaliges Durchführen eines Schrittes aufgebaut wird, der zumindest das Folgende umfasst:
a) Aufbringen eines Schichtabschnitts mit vorbestimmten Abmessungen eines Verbundwerkstoffs aus einem Metall und/oder einer Metalllegierung und Partikeln aus hochwärmeleitfähigem Material, das Diamant und/oder kubisches Bornitrid umfasst, in einem vorbestimmten Bereich auf einer Basisschicht durch Schmelzen des Metalls oder der Metalllegierung mittels einer Wärmequelle auf solche Weise, dass das Metall und/oder die Metalllegierung innerhalb der vorbestimmten Abmessungen eine zusammenhängende Matrix bilden, in der Partikel aus dem hochwärmeleitfähigen Material eingebettet sind, und anschließendes Abkühlenlassen,
   mit der Maßgabe, dass das Metall, sofern es nicht ein Bestandteil der Metalllegierung ist, nicht aus den Alkalimetallen und Calcium, Strontium, Barium und Radium ausgewählt ist, wobei die Größe der Partikel des hochwärmeleitfähigen Materials, das Diamant und/oder kubisches Bornitrid umfasst, im Bereich bis von 6 µm bis 250 µm liegt, wobei das hochwärmeleitfähige Material aus Partikeln aus Diamant und/oder kubischem Bornitrid besteht, die durch Oxidation angeätzt oder aufgeraut worden sind, wobei der Anteil des hochwärmeleitfähigen Materials in dem hergestellten Verbundwerkstoff 40 Vol. % bis 80 Vol. % beträgt.

In einer zweckmäßigen Ausführungsform ist das Verfahren dadurch gekennzeichnet, dass es das Aufbringen des Schichtabschnitts auf der Basisschicht durch einen der folgenden Schritte 1) bis 4) umfasst, welche umfassen:
1) Bereitstellen eines Pulverbetts aus einer Mischung von pulverförmigen Metall- und/oder Metalllegierungspartikeln und Partikeln des hochwärmeleitfähigen Materials, das Diamant und/oder kubisches Bornitrid umfasst, und/oder einer mechanischen Legierung von dem Metall und/oder der Metalllegierung und Partikeln des hochwärmeleitfähigen Materials auf der Basisschicht und Schmelzen des Metalls und/oder der Metalllegierung in einem Teilbereich des Pulverbetts mit vorbestimmten Abmessungen mittels einer Wärmequelle auf solche Weise, dass das Metall und/oder die Metalllegierung innerhalb der vorbestimmten Abmessungen eine zusammenhängende Matrix bilden, in der Partikel aus dem hochwärmeleitfähigen Material eingebettet sind, und anschließendes Abkühlenlassen;
2) Zufuhr von pulverförmigen Metall- und/oder Metalllegierungspartikeln und Partikeln des hochwärmeleitfähigen Materials, das Diamant und/oder kubisches Bornitrid umfasst, und/oder einer pulverförmigen mechanischen Legierung von dem Metall und/oder der Metalllegierung und Partikeln des hochwärmeleitfähigen Materials mittels einer oder mehrerer Düsen auf einen vorbestimmten Bereich der Unterlage und Schmelzen des Metalls und/oder der Metalllegierung mittels einer Wärmequelle auf solche Weise, dass das Metall und/oder die Metalllegierung innerhalb der vorbestimmten Abmessungen eine zusammenhängende Matrix bilden, in der Partikel aus dem hochwärmeleitfähigen Material eingebettet sind, und anschließendes Abkühlenlassen;
3) Einwirkenlassen einer Wärmequelle auf ein Ende eines hohlen Metall- und/oder Metalllegierungsdrahts oder -rohrs, in dessen Hohlraum Partikel des hochwärmeleitfähigen Materials, das Diamant und/oder kubisches Bornitrid umfasst, und/oder der mechanischen Legierung von dem Metall und/oder der Metalllegierung und Partikeln des hochwärmeleitfähigen Materials angeordnet sind, auf solche Weise, dass der Teil des Metall- und/oder Metalllegierungsdrahts- oder -rohrs, auf den die Wärmequelle einwirkt, abgeschmolzen wird und innerhalb eines vorbestimmten Bereichs eine zusammenhängende Matrix bildet, in der Partikel des hochwärmeleitfähigen Materials eingebettet sind, und anschließendes Abkühlenlassen;
4) Bereitstellen eines Pulverbetts aus pulverförmigen Partikeln des hochwärmeleitfähigen Materials, das Diamant und/oder kubisches Bornitrid umfasst, und eines Drahtes oder Stabs aus dem Metall oder der Metalllegierung, Einwirkenlassen einer Wärmequelle auf ein Ende des Drahts oder Stabs auf solche Weise, dass der Teil des Drahts oder Stabs, auf den die Wärmequelle einwirkt, abgeschmolzen wird und als Schmelze einen vorbestimmten Abschnitt des Pulverbetts aus dem hochwärmeleitfähigen Material infiltriert und dessen Partikel in Form einer zusammenhängenden Matrix umgibt, und anschließendes Abkühlenlassen.

In einer weiteren Ausführungsform der Erfindung ist das Verfahren dadurch gekennzeichnet, dass es den vorstehenden Verfahrensschritt a) und bevorzugt die vorstehenden Verfahrensschritte 1) bis 4) und gegebenenfalls die weiteren hierin für das Herstellen des Bauteils beschriebenen Verfahrensschritte mit Ausnahme der derjenigen, die das Herstellen von auch andere Materialien als den Verbundwerkstoff umfassenden Bauteilen betreffen, und das anschließende Abtrennen jeglicher Basisschicht, die nicht aus dem Verbundwerkstoff besteht, umfasst, wobei in dem Fall, in dem das hochwärmeleitfähige Material kein kubisches Bornitrid umfasst, zumindest ein weiterer Schichtabschnitt aus Verbundwerkstoff auf einer Basisschicht, die den zuvor aufgebrachten Schichtabschnitt aus dem Verbundwerkstoff umfasst, aufgebracht wird.

### KURZE BESCHREIBUNG DER FIGUREN

Fig. 1 stellt schematisch eine erste Ausführungsform des erfindungsgemäßen Verfahrens dar.
Fig. 2 stellt schematisch eine zweite Ausführungsform des erfindungsgemäßen Verfahrens dar.
Fig. 3 stellt schematisch eine dritte Ausführungsform des erfindungsgemäßen Verfahrens dar.
Fig. 4 stellt schematisch eine vierte Ausführungsform des erfindungsgemäßen Verfahrens dar.
Fig. 5 zeigt eine Komponente eines Laser-Transmitters, in der ein erfindungsgemäßes Bauteil als Wärmesenke für die Laserdioden verwendet wird.

### AUSFÜHRUNGSFORMEN DER ERFINDUNG

Metalle sind als wärmeleitfähige Stoffe insofern von Vorteil, als sie durch vielfältige Verfahren leicht zu allen gewünschten Formen verarbeitet werden können, unter anderem durch die eingangs erwähnte generative Herstellung von Bauteilen. Ihre Wärmeleitfähigkeiten sind aber im Vergleich zu einigen nicht-metallischen wärmeleitfähigen Substanzen, deren Gitter kovalente Bindungen aufweisen, beschränkt.

Die Metalle mit der höchsten Wärmeleitfähigkeit sind Ag, Cu und Au, deren Wärmeleitfähigkeiten 419 W/mK, 385 W/mK bzw. 320 W/mK betragen. Die Wärmeleitfähigkeit des unter anderem wegen seiner geringen Dichte interessanten Al beträgt nur 230 W/mK, seine spezifische, d. h. dichtebezogene Wärmeleitfähigkeit (87 W/m/K/g/cm³) ist allerdings doppelt so hoch wie die von Cu.

Unter den isotropen wärmeleitenden nicht-metallischen Substanzen weist Diamant die höchste Wärmeleitfähigkeit auf (bis zu 2300 W/mK), gefolgt von kubischem Bornitrid (etwa 1700-1750 W/mK).

Reiner Diamant und reines kubisches Bornitrid (im Folgenden: cBN) können jedoch im Allgemeinen nicht zu vernünftigen Kosten zu Bauteilen verarbeitet werden.

Verbundwerkstoffe aus Ag-, Cu- oder Al- Matrixmaterial und Diamant sind bekannt und weisen Wärmeleitfähigkeiten auf, die höher sind als die der Matrixmetalle. Wie jedoch schon eingangs erwähnt, beschränken sich ihre Strukturen bedingt durch die Art der Herstellung auf einfache Formen, da eine mechanische Bearbeitung sehr schwierig ist.

Es wurde nun überraschend gefunden, dass sich eine Mischung (im breitesten Sinne) von Diamant und/oder cBN enthaltendem hochwärmeleitfähigem Material und Metall und/oder einer Metalllegierung auf ähnliche Weise wie reines Metall oder eine reine Metalllegierung zur Verarbeitung in einem generativen Herstellungsverfahren (oder schichtweisem Aufbau oder ALM) eignet und sich somit auch komplexe Strukturen in endkonturnaher Form aus derartigen Verbundwerkstoffen herstellen lassen.

Allgemein gesprochen, wird auf einer Basisschicht lokal in einem vorbestimmten Bereich in dünner Schicht eine Mischung mit vorbestimmten Abmessungen erzeugt, die eine geschmolzene Metall- oder Metalllegierungsmatrix (im Folgenden kollektiv als "Metallmatrix" bezeichnet) mit darin eingebetteten Diamant- und/oder cBN-haltigen Partikeln umfasst. Diese ergibt nach Abkühlen einen Schichtabschnitt einer Struktur aus Verbundwerkstoff, die eine Metall- oder Metalllegierungsmatrix mit eingebetteten Diamant- oder cBN-haltigen Partikeln umfasst.

Dieser Vorgang kann bei Bedarf auf der Schicht, welche den oben gebildeten Schichtabschnitt aus Verbundwerkstoff umfasst oder aus diesem besteht, zumindest einmal wiederholt werden. In der Regel wird der Vorgang noch weitere Male, z.B. etwa 5-mal, etwa 10-mal, etwa 20-mal, etwa 100-mal oder noch öfter, wiederholt, bis die Schichten, welche die Abschnitte aus Verbundwerkstoff umfassen oder aus diesen bestehen, die gewünschte Gesamtdicke oder Geometrie aufweisen.

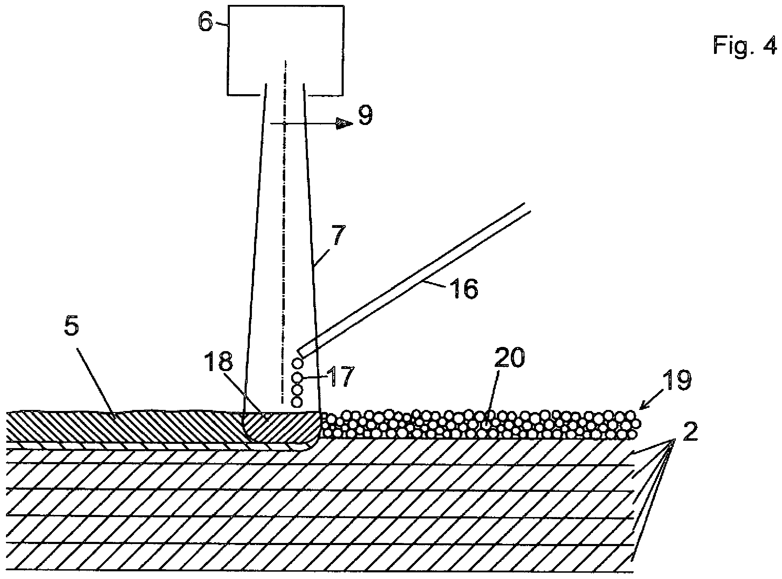

Die Grundfläche des Schichtabschnitts aus Verbundwerkstoff, der auf der Basisschicht gebildet wird, ist häufig kleiner als die Grundfläche der Basisschicht, z.B. umfasst sie etwa 90% oder weniger, 75% oder weniger, etwa 50% oder weniger, etwa 25% oder weniger etwa 10 % oder weniger, etwa 1% oder weniger, etwa 0,1% oder sogar noch weniger der Grundfläche der Basisschicht. Dies trifft insbesondere zu, wenn die Basisschicht die unterste Basisschicht des Bauteils, d.h. in der Regel die Bauplattform, ist. Insbesondere trifft dies für die nachstehend anhand der Figur 4 besprochene Ausführungsform 4 zu.

Die kleinstmögliche Grundfläche des Schichtabschnitts, d.h. die feinste herstellbare Struktur, hängt insbesondere von der Größe des Licht- oder Strahlflecks der eingesetzten Wärmequelle ab, wobei die Partikelgröße des hochwärmeleitfähigen Materials ebenfalls eine Rolle spielen kann. Sie liegt je nach verwendeter Verfahrensvariante häufig im Bereich von etwa 200 µm² bis etwa 4 mm².

Das oder die im erfindungsgemäßen Verfahren eingesetzte(n) Metalle kann bzw. können, wenn es/sie in Form eines Elements vorliegt/vorliegen, aus allen Metallen des Periodensystems ausgewählt sein, ausgenommen die Alkalimetalle und Calcium, Barium, Strontium und Radium. Metalllegierungen können jedoch die letztgenannten Elemente enthalten.

Bevorzugte Metalle sind Al, Cu, Ag, Au, Titan (Ti), Magnesium (Mg), Zink (Zn), Zinn (Sn) und Eisen (Fe). Metalllegierungen auf der Basis von Al, Cu, Ag, Au, Ti, Mg, Zn, Sn und/oder Fe, d. h. auch gängige Werkstoffgruppen wie Messing, Bronze und Stahl, sind ebenfalls bevorzugt.

Unter "Metalllegierung" wird eine Legierung verstanden, die in erster Linie mindestens zwei verschiedene Metalle enthält, wie Messing oder Bronze, aber auch eine Legierung, die neben Metallen kleine Anteile an Nicht-Metallen wie Kohlenstoff (C), Stickstoff (N) oder Phosphor (P) enthält, wie das bei gewissen Stählen der Fall ist.

"Abkühlenlassen" bedeutet im Rahmen dieser Patentanmeldung, dass sich die Temperatur der Mischung so weit erniedrigt, bis diese fest wird. Dies geschieht im Regelfall durch einfaches Einwirkenlassen der Umgebungstemperatur, kann aber gegebenenfalls auch durch aktives Kühlen beispielweise mit einem Kühlfluid vorgenommen werden.

Das Metall und/oder die Metalllegierung (im Folgenden kollektiv als "Metall" bezeichnet), welche(s) die Matrix bildet, wird mit Hilfe einer Wärmequelle, die bevorzugt beweglich ist, geschmolzen, wobei auch die darunter liegende Verbundwerkstoffschicht oder andere Basisschicht angeschmolzen wird (es sei denn, diese ist unter den Bedingungen nicht anschmelzbar). Dies ist erwünscht, weil dadurch die Schichten aneinander haften.

Häufig wird das Bilden einer geschmolzenen Metall- oder Metalllegierungsmatrix (im Folgenden kollektiv als "Metallmatrix" bezeichnet) mit darin eingebetteten Diamant- und/oder cBN-haltigen Partikeln und das anschließende Abkühlen in einem angrenzenden Bereich auf derselben Basisschicht wiederholt, um eine Struktur aus Verbundwerkstoff mit den gewünschten Abmessungen zu erzeugen.

Bei der bevorzugt beweglichen Wärmequelle kann es sich beispielsweise um einen Laserstrahl, UV-Licht einen Partikelstrahl (z.B. lonenstrahl), einen Elektronenstrahl oder um einen Lichtbogen handeln (wobei in den beiden letztgenannten Fällen die Metallmatrix auf Masse liegt). Die Laserwellenlängen können in jedem Wellenlängenbereich liegen, der von dem Metall absorbiert wird. Als Beispiele seien ein CO₂-Laser, ein Nd:YAG-Laser oder ein UV-Laser genannt.

Die Leistungsabgabe der Wärmequelle kann kontinuierlich oder gepulst sein. Die Leistungsdichte der Wärmequelle richtet sich nach dem Energiebedarf, um das Metall zu schmelzen. Im Allgemeinen liegt sie in der Größenordnung von 10 kW/cm² bis 100 kW/cm².

Bei der Verwendung eines Laserstrahls, UV-Lichts oder Lichtbogens als Wärmequelle muss ein Inertgas, wie ein Edelgas oder Stickstoff, als Schutzgas oder Schutzatmosphäre verwendet werden. Bei der Verwendung eines Elektronenstrahls oder eines Partikelstrahls (z.B. lonenstrahls) wird wie erforderlich im Vakuum gearbeitet.

Im Allgemeinen wird das Verfahren so durchgeführt, dass mit einer beweglichen Wärmequelle der obige Schritt a) oder einer der obigen Schritte 1) bis 4) auf derselben Basisschicht bei kontinuierlicher Leistungsabgabe der Wärmequelle fortlaufend durchgeführt wird oder bei pulsförmiger Leistungsabgabe der Wärmequelle fortlaufend so häufig wiederholt wird, bis eine vorbestimmte Abmessung des Schichtabschnitts erzielt wird.

Auf derselben Basischschicht können auch mehrere aneinanderstoßende oder separate Schichtabschnitte aus dem Verbundwerkstoff gegebenenfalls auch durch unterschiedliche, den obigen Schritten 1) bis 4) entsprechende Verfahrensvarianten aufgebracht werden.

Das Verfahren der Erfindung kann bei einer umgebendenden Temperatur durchgeführt werden, die Raumtemperatur (im Allgemeinen etwa 20 °C bis etwa 26°C) oder, zumindest während eines Teils des Verfahrens, eine erhöhte Temperatur im Bereich von etwa 30% bis etwa 60% der Soliduslinie (°C) des Metalls oder der Metalllegierung ist. Im letztgenannten Fall wird das Bauteil nach Fertigstellung im Allgemeinen auf Raumtemperatur abkühlen gelassen. Bei der erhöhten Temperatur wird insbesondere bevorzugt gearbeitet, wenn dünnwandige Bauteile hergestellt werden. Ohne durch eine Theorie gebunden sein zu wollen, wird angenommen, dass auf diese Weise durch das Herabsetzen der Temperaturdifferenzen im Bauraum Eigenspannungen und Verzug des Bauteils minimiert und durch das Herabsetzen der Erstarrungsgeschwindigkeit die Mikrostruktur/das Gefüge des Verbundwerkstoffs bedarfsorientiert eingestellt werden können.

Die Diamant- und/oder cBN-haltigen Partikel, die im erfindungsgemäßen Verfahren eingesetzt werden, weisen im Allgemeinen längste Längenabmessungen auf, die zumindest zu 95% im Bereich von etwa 6 µm bis etwa 250 µm liegen, wobei je nach der verwendeten Durchführungsform des Verfahrens ein Bereich von 6 µm bis 60 µm, oder von etwa 60 µm bis etwa 200 µm bevorzugt sein kann. Die Größenverteilung des im erfindungsgemäßen Verfahren verwendeten hochwärmeleitfähigen Materials ist bimodal oder trimodal, um eine dichtere Packung der Diamant- und/oder cBN-haltigen Partikel zu gewährleisten.

Wenn das Metall oder die Metalllegierung in Form von Partikeln eingesetzt wird, die geschmolzen werden, liegt die längste Längenabmessung von mindestens 95 % der Partikel im Bereich von etwa 10 µm oder etwa 20 µm bis etwa 400 µm, bevorzugt etwa 30 µm bis etwa 120 µm.

Die zusammenhängende Metallmatrix darf in dem gebrauchsfertigen Bauteil keine Hohlräume enthalten, da dies die Wärmeleitfähigkeit beeinträchtigen würde.

Eine gute Benetzung und Haftung der Diamant- und/oder cBN-haltigen Partikel durch das Metall bzw. an dem Metall ist ebenfalls essentiell für eine gute Wärmeleitfähigkeit des Verbundwerkstoffs. Zu diesem Zweck wird die Oberfläche von Diamant- und/oder cBN-Kristallen durch eine Wärmebehandlung in einer oxidierenden Atmosphäre bei mäßig hohen Temperaturen (z.B. 800 °C) angeätzt oder aufgeraut. Auch durch gewisse Beschichtungen der Oberfläche der Diamant- und/oder cBN-Partikel, z.B. mit SiC oder AlN, kann die Benetzung der Oberfläche durch das Metall und die Haftung an diesem verbessert werden. Insbesondere in diesem Fall kann sich die nachstehend erörterte Wärmebehandlung des Verbundwerkstoffs nach dessen Herstellung erübrigen.

Diamant und cBN beginnen unter Atmosphärendruck bei etwa 1500-1600°C sich in Graphit bzw. hexagonales Bornitrid umzuwandeln. Diese Phasenänderung beginnt bei allseitiger Erwärmung von außen an der Oberfläche und schreitet dann in das Innere des Kristalls fort. Wenn der Diamant- oder cBN-Kristall nur für eine sehr kurze Zeit bei dieser Temperatur oder darüber hinaus erwärmt wird, wird die Umwandlung in der Regel nur zu einem vernachlässigbaren Ausmaß stattfinden. Ferner werden in solchen Fällen vorteilhaft (z.B. mit SiC, AlN) beschichtete Kristalle verwendet.

cBN kann bei erhöhten Temperaturen auch mit gewissen Metallen reagieren. Auch hier empfiehlt sich eine kurze Erwärmungszeit bei derartigen Temperaturen sowie z.B. eine oxidische Passivierung oder Passivierung durch Beschichtung der Oberfläche.

In dem Fall, in dem die Metallmatrix noch Defekte wie z.B. Hohlräume aufweist, und/oder zur Verbesserung der Haftung des Metalls an der Oberfläche kann der Verbundwerkstoff nach Herstellung einer Wärmebehandlung bei Atmosphärendruck oder unter Vakuum oder auch bei erhöhtem Druck ("Heißpressen" oder "heißisostatischem Pressen") unterzogen werden.

Die Wärmebehandlung wird im Allgemeinen bei Temperaturen von etwa 40 bis 80 %, häufig bei etwa 55 % der Schmelztemperatur (in °C) des Metalls durchgeführt. Die Zeitdauer kann, wenn bei Atmosphärendruck gearbeitet wird, Minuten bis mehrere Stunden betragen. Bei einer Wärmebehandlung mittels heißisostatischen Pressens, das gewöhnlich über etwa 1 bis etwa 4 Stunden durchgeführt wird, werden im Allgemeinen Drücke des Schutzgases von etwa 50 bis etwa 200 MPa angewandt. Der Erfolg der Wärmebehandlung (d.h. Verbesserung der Haftung des Metalls an der Oberfläche des hochwärmeleitfähigen Materials und Defektfreiheit der Metallmatrix) kann z.B. elektronenmikroskopisch oder durch Wärmeleitfähigkeitsmessung überwacht werden.

Der Anteil des hochwärmeleitfähigen Materials im mittels des erfindungsgemäßen Verfahrens hergestellten Verbundwerkstoff beträgt im Allgemeinen etwa 40 Vol.-% oder weniger bis etwa 80, gewöhnlicher etwa 60 Vol.-%. In den nachstehend ausführlicher besprochenen Verfahren 1) bis 4) wird dies noch näher erläutert.

Die Wärmeleitfähigkeit des Verbundwerkstoffs ist im Allgemeinen umso höher, je höher die Konzentration des hochwärmeleitfähigen Materials ist. Die Konzentration des hochwärmeleitfähigen Materials kann, falls erwünscht, in verschiedenen Schichten variieren, so kann zum Beispiel mindestens eine Schicht eine andere Konzentration aufweisen als die restlichen Schichten.

Die Schichtdicken der einzelnen Verbundwerkstoffschichten sind sehr variabel und variieren mit der speziellen verwendeten Verfahrensvariante (siehe die nachstehend besprochenen Verfahrensvarianten 1) bis 4)). Im Allgemeinen liegen sie in einem Bereich von etwa 20 µm bis zu 2 mm, gegebenenfalls aber auch darunter, wenn sehr kleine Partikel des hochwärmeleitfähigen Materials eingesetzt werden, oder in speziellen Ausführungsformen, wie nachstehend erörtert, auch darüber.

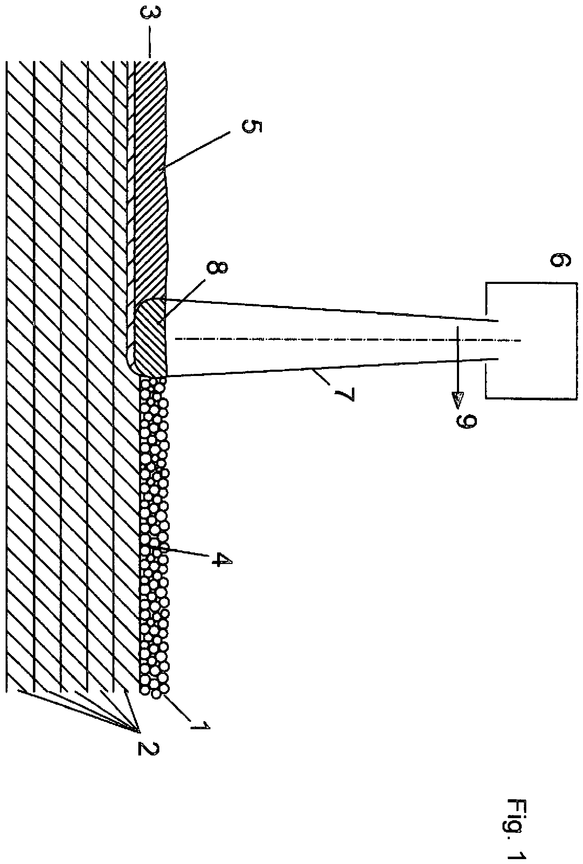

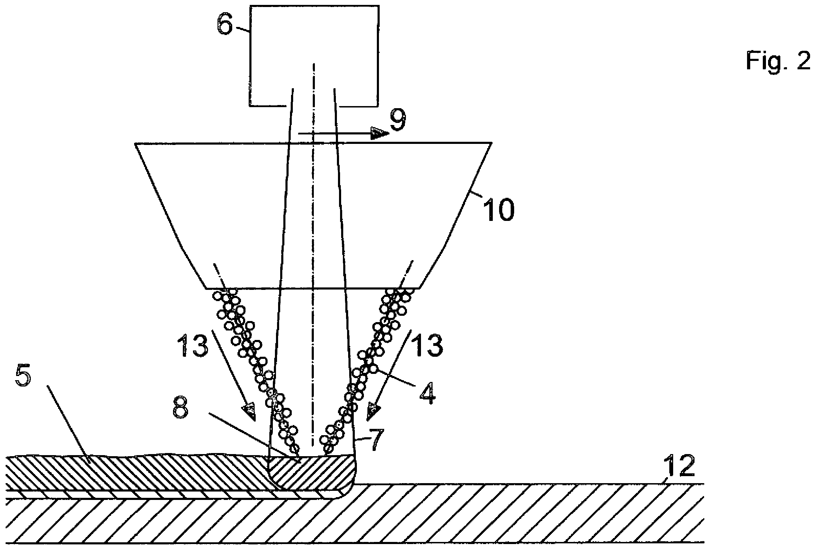

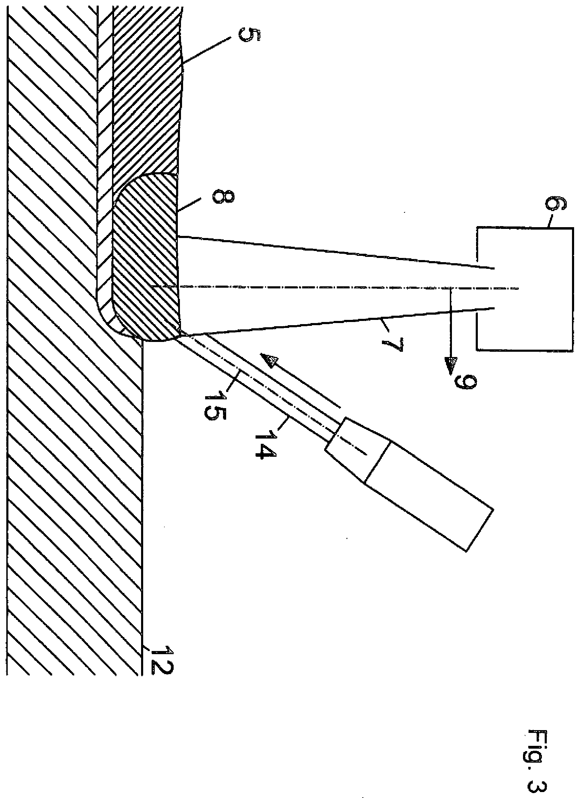

Üblicherweise besitzen die feinsten Strukturen, die mit dem erfindungsgemäßen Verfahren hergestellt werden, Abmessungen im Größenbereich von einigen µm, z.B. etwa 20, etwa 40 oder etwa 50 µm, wenn kleine Partikel des hochwärmeleitfähigen Materials eingesetzt werden. Die obere Grenze der Größe der Strukturen ist eine Frage der Größe der Herstellungsanlage. Derzeit sind Bauteile mit einer Größe bis zu 350 mm mit den nachstehend im Zusammenhang mit den Figuren 1 und 4 beschriebenen Ausführungsformen 1 und 4 und problemlos von 500 mm oder mehr mit den machstehend im Zusammenhang mit den Figuren 2 und 3 beschriebenen Ausführungsformen 2 und 3 herstellbar.

Im Folgenden werden anhand der Figuren 1 bis 4 vier unterschiedlichen oben definierten Ausführungsformen 1) bis 4) des erfindungsgemäßen Verfahrens beschrieben, die hauptsächlich verwendet werden, um die Mischung zu erzeugen, die eine geschmolzene Metall- oder Metalllegierungsmatrix und darin eingebettete Diamant- und/oder cBN-haltige Partikel umfasst.

In einer ersten Ausführungsform des Verfahrens wird, wie in Fig. 1 schematisch dargestellt, ein Pulverbett 1 aus einer Mischung von pulverförmigen Metall- und/oder Metalllegierungspartikeln und Partikeln des hochwärmeleitfähigen Materials, das Diamant und/oder kubisches Bornitrid umfasst, und/oder einer mechanischen Legierung von dem Metall und/oder der Metalllegierung und Partikeln des hochwärmeleitfähigen Materials (im Folgenden kollektiv als Werkstoffpulver 4 bezeichnet), lokal auf einer Basisschicht, z.B. auf der obersten von mehreren hergestellten Verbundwerkstoffschichten 2, aufgetragen. Dabei liegt die Größe der Partikel des hochwärmeleitfähigen Materials, das Diamant und/oder kubisches Bornitrid umfasst, im Bereich bis von etwa 6 bis etwa 250 µm und speziell von etwa 60 bis etwa 200 µm. Das hochwärmeleitfähige Material, das Diamant und/oder kubisches Bornitrid umfasst, wird durch Oxidation angeätzt oder aufgeraut. Eine bewegliche, in der Regel computergesteuerte Wärmequelle 6 erzeugt einen Strahl oder Lichtbogen 7, der das Werkstoffpulver und die darunter liegende Basisschicht an deren Oberfläche lokal aufheizt. Es entsteht ein "Schmelzbad" 8, in dem das Metall im Werkstoffpulver geschmolzen wird. Die darunter liegende Verbundwerkstoffschicht 2 wird an der Kontaktfläche zum Werkstoffpulver 4 ebenfalls angeschmolzen oder erweicht. Wenn die Wärmequelle 6 und damit der Strahl oder Lichtbogen 7 in Richtung 9 des noch ungeschmolzenen Werkstoffpulvers 4 weiterbewegt wird, kühlt das geschmolzene Werkstoffpulver 4 ab und es entsteht in der Schicht 3, die sich teilweise aus Werkstoffpulver 4 und dem aufgeschmolzenen Verbundwerkstoff 5 zusammensetzt, ein Schichtabschnitt aus erstarrtem Verbundwerkstoff 5 mit definierten Abmessungen an einer vorbestimmten Position.

Durch das aufeinanderfolgende Aufschmelzen und Erstarren von Verbundwerkstoffschichten wird Schicht für Schicht das Bauteil oder ein Abschnitt des Bauteils aus dem Verbundwerkstoff endkonturnah erzeugt. Nicht aufgeschmolzene Pulverteile werden nach dem Gesamtherstellungsvorgang entfernt.

Das Werkstoffpulver 4 kann durch einfaches mechanisches Mischen, z.B. in einem Trommelmischer, von Metall oder Metalllegierung und hochwärmeleitfähigem Material hergestellt werden. Es kann sich bei dem Werkstoffpulver 4 aber auch um eine pulverförmige sogenannte mechanische Legierung handeln. Diese kann hergestellt werden, indem das Metall oder die Metalllegierung in Gegenwart des hochwärmeleitfähigen Materials z.B. in einer Kugelmühle oder einem Attritor plastisch verformt wird und sich dabei die Partikel des hochwärmeleitfähigen Materials in diese(s) einlagern.

Die Größe der Metall- oder Metalllegierungspartikel im Pulverbett beträgt im Allgemeinen etwa 4, etwa 6, etwa 10, etwa 20 oder etwa 30 bis etwa 100 µm, die der Partikel des hochwärmeleitfähigen Materials im Allgemeinen etwa 4 bis etwa 200 µm, bevorzugt etwa 60 bis etwa 200 µm.

Die Schichtdicke des Pulverbetts 1 bzw. des Werkstoffpulvers 4 liegt im Allgemeinen im Bereich von etwa 20 µm bis 350 µm, z.B. etwa 100 bis etwa 250 µm, und insbesondere bei etwa 200 µm. Die Schichtdicke des entstandenen Verbundwerkstoffs 5 ist etwas geringer als die Schichtdicke des Pulverbetts 1, jedoch nicht wesentlich.

Die Geschwindigkeit, mit der die Lichtquelle im vorstehenden Verfahren weiterbewegt wird, beträgt in etwa 500-1000 mm/s, kann aber je nach Bedarf auch geringer oder sehr viel höher sein, z.B. bei einem magnetisch bewegten Elektronenstrahl etwa 1.000.000 mm/s.

Die Zeitspanne, in der das Pulver in dieser Verfahrensvariante einer Erwärmung ausgesetzt wird, liegt im Allgemeinen im Bereich von Bruchteilen von Sekunden, z. B. von etwa 1 Millisekunde bis etwa 100, etwa 150 oder etwa 200 Millisekunden.

Die Abkühlungsgeschwindigkeit des geschmolzenen Werkstoffpulvers kann in dieser Verfahrensvariante sehr hoch sein, z.B. bis zu etwa 5.000 °C pro s.

Die Konzentrationen des hochwärmeleitfähigen Materials im entstandenen Verbundwerkstoff liegen bei dieser Ausführungsform des Verfahrens im Allgemeinen im Bereich von etwa 40 Vol.-% oder weniger bis etwa 70 Vol.-%.

Das Pulverbett kann vor Einwirkung der Wärmequelle einer Wärmebehandlung bei etwa 30-60% der Soliduslinie (°C) unterzogen werden.

Falls z.B. durch Elektronenmikroskopie oder eine sonstige Werkstoffprüfung festgestellt wird, dass die Metallmatrix nach Einwirkung der Wärmequelle und Abkühlen nicht vollständig hohlraumfrei ist oder nicht ausreichend an der Oberfläche des hochwärmeleitfähigen Materials haftet, wird eine anschließende Wärmebehandlung bei Atmosphärendruck oder unter Vakuum oder ein wie oben beschriebenes heißisostatisches Pressen durchgeführt. Dies gilt auch für die weiteren beschriebenen Ausführungsformen des erfindungsgemäßen Verfahrens.

Mit der vorstehenden Ausführungsform des Verfahrens können sehr komplexe Bauteile auch mit hinterschnittenen Strukturen und Strukturen, die nur im Inneren den Verbundwerkstoff enthalten, hergestellt werden. Die Strukturen können so geringe Abmessungen wie etwa 20 µm oder sogar darunter aufweisen, wenn kleine Partikel des hochwärmeleitfähigen Materials eingesetzt werden.

Fig. 2 zeigt schematisch eine zweite Ausführungsform des Verfahrens zum schichtweisen Aufbau eines Bauteils, bei dem Werkstoffpulver 4 nicht als Pulverbettschicht, sondern lokal aufgetragen wird ("Pulverzufuhr-Verfahren"). Auf einer Verbundwerkstoffschicht 12, die durch Aufschmelzen erzeugt wurde, wird eine weitere Verbundwerkstoffschicht 5 aufgeschmolzen. Über eine Düse 10 wird ungeschmolzenes Werkstoffpulver 4 in Richtung 13 auf einem Bereich aufgebracht, der unter Einwirkung des Strahls oder Lichtbogens 7 der Wärmequelle 6 ein Schmelzbad 8 bildet, in dem das Werkstuffpulver 4 bzw. genauer dessen Metallanteil schmilzt. Die darunter liegende Werkstoffschicht 12 wird an der Oberfläche ebenfalls angeschmolzen oder erweicht.

Wenn der Strahl 7 bzw. die Düse 10 in Richtung 9 weiterwandert, kühlt das geschmolzene Werkstoffpulver 4 ab und es entsteht die Verbundwerkstoffschicht 5. Durch sukzessives Aufbringen, Schmelzen des Werkstoffpulvers 4 und Abkühlen wird Schicht für Schicht das Bauteil oder ein Abschnitt eines Bauteils aus dem Verbundwerkstoff erzeugt. Nicht aufgeschmolzene Pulverteile werden entfernt.

Die Düse 10 ist beweglich und mit der Energiequelle 6 so verbunden, dass beide allein oder zusammen bewegt werden können. Durch das Auftragen des Werkstoffpulvers über die Düse 10 wird das Werkstoffpulver genau positioniert.

Das Werkstoffpulver 4 kann über die Düse 10 variabel zugeführt und in seiner Zusammensetzung variiert werden.

Die Größe der Partikel des Werkstoffpulvers 4 ist in der Verfahrensvariante mit Pulverauftrag durch Düsen in der gleichen Größenordnung wie in der Pulverbett-Verfahrensvariante (siehe oben).

Es können eine oder mehrere Düsen zum Aufsprühen des Werkstoffpulvers verwendet werden (z.B. um Metallpartikel und Partikel des hochwärmeleitfähigen Materials getrennt aufzubringen, wodurch deren Volumenverhältnis leichter variiert werden kann). Die Düse(n) kann/können koaxial (was üblich ist) oder lateral zum Strahl 7 angeordnet sein. Der Strahl 7 kann auch koaxial umhüllend zum zentralen Pulverstrahl 4 angeordnet sein.

Die Geschwindigkeit, mit der die Lichtquelle und die Düse(n) in der Pulverzufuhr-Verfahrensvariante weiterbewegt werden, beträgt im Allgemeinen etwa 10 bis etwa 40 mm/s, kann aber je nach Bedarf auch geringer oder höher sein.

Die Schichtdicken des mit der Pulverzufuhr-Verfahrensvariante erzeugten Verbundwerkstoffs liegen im Allgemeinen im Bereich von etwa 20 µm bis 2 mm, bevorzugt im Bereich von etwa 200 bis etwa 500 µm und insbesondere bei etwa 400 µm.

Die Zeitspannen, in denen das Pulver bei dieser Ausführungsform einer Erwärmung ausgesetzt wird, liegen im Allgemeinen im Bereich von etwa einer zehntel Sekunde bis zu etwa einer Sekunde. Die Abkühlungsgeschwindigkeit des geschmolzenen Werkstoffpulvers kann hoch sein, z.B. bis zu etwa 3000 °C pro s.

Die Konzentrationen des hochwärmeleitfähigen Materials im entstandenen Verbundwerkstoff liegen bei der Pulverzufuhr-Verfahrensvariante im Allgemeinen im Bereich von etwa 40 Vol.-% oder weniger bis etwa 70 Vol.-%.

Auch mit der Pulverzufuhr-Verfahrensvariante ist eine vielfältige Komplexität der Struktur der hergestellten Bauteile erzielbar, beispielsweise können innere Strukturen und ähnlich wie bei der Pulverbett-Verfahrensvariante sehr feine Strukturen leicht hergestellt werden.

Fig. 3 zeigt schematisch eine dritte Ausführungsform des Verfahrens zum schichtweisen Aufbau eines Bauteils, bei dem zum Aufbringen eines Werkstoffpulvers ein hohler Metalldraht oder ein Metallrohr 14 verwendet wird, der bzw. das Partikel 15 des hochwärmeleitfähigen Materials oder der vorstehend erläuterten mechanischen Legierung von Metall oder Metalllegierung und hochwärmeleitfähigem Material enthält. Der Draht hat im Allgemeinen einen Durchmesser von etwa 1 bis etwa 2 oder auch etwa 3 mm. Ovale Drähte, Flachdrähte oder Rechteckdrähte können auch eingesetzt werden. Die Dicke beträgt dann im Allgemeinen bis zu etwa 3 mm, die Breite bis zu etwa 8 mm. Das Rohr hat im Allgemeinen einen Durchmesser von etwa 2 oder etwa 3 mm bis 4 mm, kann aber gegebenenfalls auch einen größeren Durchmesser aufweisen.

Der Strahl oder Lichtbogen 7 der Wärmquelle 6 trifft auf den Draht oder das Rohr 14 und schmilzt es. Die Partikel 15 des hochwärmeleitfähigen Materials oder der mechanischen Legierung im Draht oder Rohr 14 fallen auf die Basisschicht 12 und bilden in der Wärme des Strahls 7 zusammen mit dem Metall des Drahts oder Rohrs ein Schmelzbad 8, in dem die Metallmatrix das hochwärmeleitfähige Material einschließt. Die darunter liegende Verbundwerkstoffschicht 12 wird an der Oberfläche ebenfalls angeschmolzen oder erweicht.

Wenn der Strahl 7 weiterwandert in Richtung 9, kühlt das Material im Schmelzbad 8 ab und es entsteht eine Schicht 5 aus Verbundwerkstoff.

Die Größe der Partikel 15 aus dem hochwärmeleitfähigen Material oder der mechanischen Legierung in dem Draht oder Rohr 14 liegt im Allgemeinen im Bereich von etwa 20 µm bis etwa 400 µm.

Die Geschwindigkeit, mit der die Lichtquelle 6 und der Draht oder das Rohr 14 in weiterbewegt werden, beträgt im Allgemeinen etwa 10 bis etwa 40 mm/s, kann aber je nach Bedarf auch geringer sein.

Die Schichtdicken der hier erörterten Verfahrensvariante liegen im Allgemeinen im Bereich von etwa 1 bis zu etwa 2mm oder 3 mm oder in der Größenordung der Abmessungen des Draht- oder Rohrquerschnitts.

Die Zeitspannen, in denen das Material im Schmelzbad einer Erwärmung ausgesetzt wird, liegen im Allgemeinen im Bereich von einer zehntel Sekunden bis etwa 1 oder 2 Sekunden. Die Abkühlungsgeschwindigkeit der Schmelze ist geringer als in den bei den vorstehend erörterten Verfahrensvarianten und liegt im Allgemeinen bei etwa 500 bis etwa 2000 °C pro s.

Die Konzentrationen des hochwärmeleitfähigen Materials im entstandenen Verbundwerkstoff liegen im Allgemeinen im Bereich von etwa 40 Vol.-% oder weniger bis etwa 60 Vol.-%.

Die hier erörterte Verfahrensvariante eignet sich besonders zur Herstellung großer endkonturnaher Strukturen.

Fig. 4 zeigt schematisch als vierte Ausführungsform des Verfahrens zum schichtweisen Aufbau eines Bauteils ein lokales Infiltrationsverfahren, bei dem ein Metalldraht 16 im Strahl oder Lichtbogen 7 einer Wärmequelle 6 geschmolzen wird. Die Metallschmelze 17 infiltriert aufgrund der Schwerkraft lokal ein Pulverbett 19 aus Partikeln von hochwärmeleitfähigem Material 20 auf der obersten Schicht von Verbundwerkstoffschichten 2. Es wird eine geschmolzene Matrix 18 gebildet, die Partikel des hochwärmeleitfähigen Materials 20 einschließt. Die darunter liegende Verbundwerkstoffschicht wird an der Oberfläche ebenfalls angeschmolzen oder erweicht.

Wenn der Strahl 7 weiterwandert in Richtung 9, kühlt die geschmolzene, hochwärmeleitfähiges Material einschließende Matrix 18 ab und es entsteht eine Schicht 5 aus Verbundwerkstoff. Durch die aufeinanderfolgende Erzeugung von Verbundwerkstoffschichten wird Schicht für Schicht das Bauteil oder ein Abschnitt des Bauteils aus dem Verbundwerkstoff endkonturnah erzeugt. Nicht aufgeschmolzene Pulverteile werden danach entfernt.

Die Größe der Partikel des hochwärmeleitfähigen Materials 20 liegt im gleichen Bereich wie bei der vorstehend beschriebenen Pulverbett-Verfahrensvariante der Fig. 1.

Die Geschwindigkeit, mit der die Lichtquelle 6 und der Draht 16 weiterbewegt wird, beträgt im Allgemeinen bis zu maximal 50 mm/s.

Die Schichtdicke des Pulverbetts 19 aus Partikeln des hochwärmeleitfähigen Materials 20 liegt im Allgemeinen im Bereich von etwa 20 µm bis 350 µm, z.B. etwa 100 bis etwa 250 µm, und insbesondere bei etwa 200 µm. Die Schichtdicke des entstandenen Verbundwerkstoffs 5 ist etwas geringer als die Schichtdicke des Pulverbetts 19, jedoch nicht wesentlich.

Die Zeitspannen, in denen das Material im Schmelzbad einer Erwärmung ausgesetzt wird, liegen im Allgemeinen im Bereich von etwa einer bis zehntel Sekunde bis etwa 1 oder etwa 2 Sekunden. Die Abkühlungsgeschwindigkeit der Schmelze liegt im Allgemeinen bei etwa 500 bis etwa 2.000 °C pro s.

Die Konzentrationen des hochwärmeleitfähigen Materials im entstandenen Verbundwerkstoff kann bei der Verfahrensvariante mit lokaler Infiltration sehr hoch sein und liegt im Allgemeinen im Bereich von etwa 50 Vol.-% bis etwa 70 Vol.-% oder sogar bis etwa 80 Vol.-%.

Aus diesem Grund ist die Verfahrensvariante der lokalen Infiltration vorteilhaft, wenn eine möglichst große Steigerung der Wärmeleitfähigkeit einer Metallmatrix im Vordergrund steht.

Es ist hier noch anzumerken, dass das Aufbringen eines weiteren Schichtabschnitts aus dem Verbundwerkstoff auf einer Basisschicht, die einen zuvor aufgebrachten Schichtabschnitt des Verbundwerkstoffs umfasst, eine beliebige Verfahrensvariante der vorstehenden Verfahrensvarianten 1 bis 4 umfassen kann. Ebenso können auf einer und derselben Basisschicht aneinanderstoßende oder separate Schichtabschnitte aus dem Verbundwerkstoff durch unterschiedliche Verfahrensvarianten hergestellt werden.

Im Allgemeinen enthält die unterste Basisschicht des Bauteils keinen Verbundwerkstoff, sondern ist die Bauplattform, auf der das Bauteil errichtet wird, und wird häufig nach dessen Fertigstellung vom Bauteil abgetrennt, falls diese nicht Teil der Zielgeometrie ist.

Fig. 5 zeigt eine industrielle Komponente 1 eines Laser-Transmitters, in der eine aus dem erfindungsgemäßen Verbundwerkstoff hergestellte Wärmesenke 2 die von den Laserdioden 3 erzeugte Wärme über eine Wärmeleitungsgrenzfläche oder hochwärmeleitende Schicht 4 zu einer Grundplatte 5 mit einem Kühlsystem abführt. Elektrische Kontakte sind mit 6 bezeichnet. Die Grundfläche 7 der Komponente beträgt 135 mm x 70 mm.

Die erfindungsgemäßen endkonturnahen wärmeleitfähigen Bauteile, die durch das erfindungsgemäße generative Herstellungsverfahren erhältlich sind, können ganz aus dem oben beschriebenen Verbundwerkstoff bestehen.

Wenn in dem Fall, in dem das hochwärmeleitfähige Material kein kubisches Bornitrid umfasst, zumindest ein weiterer Schichtabschnitt aus Verbundwerkstoff auf einer Basisschicht, die den zuvor aufgebrachten Schichtabschnitt aus dem Verbundwerkstoff umfasst, aufgebracht wird und von dem ansonsten ganz aus dem Verbundwerkstoff bestehenden Bauteil die unterste Basisschicht, sofern diese keinen Verbundwerkstoff umfasst, bzw. die Bauplattform abgetrennt wird, bildet das Bauteil einen erfindungsgemäßen Verbundwerkstoff, der aufgrund des enthaltenen hochwärmeleitfähigen Materials oder aufgrund seines die Mikrostruktur des Verbundwerkstoffs charakterisierenden Schichtaufbaus neuartig ist.

Die Bauteile können aber auch noch andere Werkstoffe, z.B. reine Metalle oder Metalllegierungen, enthalten. Bauteile aus solchen gemischten Werkstoffen können generativ hergestellt werden, indem Schichten gebildet werden, die zum Teil aus dem Verbundwerkstoff und zum Teil beispielsweise aus Metall oder Metalllegierungen bestehen, oder generativ auf Basisstrukturen aus Metall oder Metalllegierungen aufgebaut werden.

Die erfindungsgemäßen Bauteile und Verbundwerkstoffe werden in erster Linie als Hochtechnologie-Kühlelemente oder Wärmesenken bei besonderen Kühlanforderungen verwendet.

Neben der hohen Wärmeleitfähigkeit im Vergleich zu dem Metall oder der Metalllegierung der Verbundstoffmatrix können die erfindungsgemäßen Bauteile aufgrund des hohen Anteils an Diamant und/oder kubischem Bornitrid noch weitere vorteilhafte Eigenschaften gegenüber dem Metall oder der Metalllegierung der Verbundstoffmatrix aufweisen, z.B. können sie:
- einen geringeren Wärmeausdehnungskoeffizienten besitzen,
- eine verbesserte mechanische Beständigkeit haben,
- verbesserte Dämpfungseigenschaften haben,
- eine höhere Steifigkeit besitzen und
- eine geringere Dichte haben.

Somit besitzen sie ein Potenzial für ein großes Einsatzgebiet insbesondere in der Luftfahrt und in der Raumfahrt.

## Patentansprüche

1. Verfahren zur Herstellung eines Bauteils mit erhöhter Wärmeleitfähigkeit durch schichtweisen Aufbau,
wobei zumindest ein Abschnitt des Bauteils durch zumindest einmaliges Durchführen eines Schritts aufgebaut wird, der zumindest das Folgende umfasst:
a) Aufbringen eines Schichtabschnitts mit vorbestimmten Abmessungen eines Verbundwerkstoffs aus einem Metall und/oder einer Metalllegierung und Partikeln aus hochwärmeleitfähigem Material, das Diamant und/oder kubisches Bornitrid umfasst, in einem vorbestimmten Bereich auf einer Basisschicht durch Schmelzen des Metalls oder der Metalllegierung mittels einer Wärmequelle auf solche Weise, dass das Metall und/oder die Metalllegierung innerhalb der vorbestimmten Abmessungen eine zusammenhängende Matrix bilden, in der Partikel aus dem hochwärmeleitfähigen Material eingebettet sind, und anschließendes Abkühlenlassen,
mit der Maßgabe, dass das Metall, sofern es kein Bestandteil der Metalllegierung ist, nicht aus den Alkalimetallen und Calcium, Strontium, Barium oder Radium ausgewählt ist,
**dadurch gekennzeichnet, dass** die Größe der Partikel des hochwärmeleitfähigen Materials, das Diamant und/oder kubisches Bornitrid umfasst, im Bereich bis von 6 µm bis 250 µm liegt, wobei die Größenverteilung bimodal oder trimodal ist, wobei das hochwärmeleitfähige Material aus Partikeln aus Diamant und/oder kubischem Bornitrid besteht, die durch Oxidation angeätzt oder aufgeraut worden sind, wobei der Anteil des hochwärmeleitfähigen Materials in dem hergestellten Verbundwerkstoff 40 Vol. % bis 80 Vol. % beträgt.

2. Verfahren nach Anspruch 1, **dadurch gekennzeichnet, dass** es das Aufbringen des Schichtabschnitts auf der Basisschicht durch einen der folgenden Schritte 1) bis 4) umfasst, welche umfassen:
1) Bereitstellen eines Pulverbetts aus einer Mischung von pulverförmigen Metall- und/oder Metalllegierungspartikeln und Partikeln des hochwärmeleitfähigen Materials, das Diamant und/oder kubisches Bornitrid umfasst, und/oder einer mechanischen Legierung von dem Metall und/oder der Metalllegierung und Partikeln des hochwärmeleitfähigen Materials auf der Basisschicht und Schmelzen des Metalls und/oder der Metalllegierung in einem Teilbereich des Pulverbetts mit vorbestimmten Abmessungen mittels einer Wärmequelle auf solche Weise, dass das Metall und/oder die Metalllegierung innerhalb der vorbestimmten Abmessungen eine zusammenhängende Matrix bilden, in der Partikel aus dem hochwärmeleitfähigen Material eingebettet sind, und anschließendes Abkühlenlassen;
2) Zufuhr von pulverförmigen Metall- und/oder Metalllegierungspartikeln und Partikeln des hochwärmeleitfähigen Materials, das Diamant und/oder kubisches Bornitrid umfasst, und/oder einer pulverförmigen mechanischen Legierung von dem Metall und/oder der Metalllegierung und Partikeln des hochwärmeleitfähigen Materials mittels einer oder mehrerer Düsen auf einen vorbestimmten Bereich der Unterlage und Schmelzen des Metalls und/oder der Metalllegierung mittels einer Wärmequelle auf solche Weise, dass das Metall und/oder die Metalllegierung innerhalb der vorbestimmten Abmessungen eine zusammenhängende Matrix bilden, in der Partikel aus dem hochwärmeleitfähigen Material eingebettet sind, und anschließendes Abkühlenlassen;
3) Einwirkenlassen einer Wärmequelle auf ein Ende eines hohlen Metall- und/oder Metalllegierungsdrahts oder -rohrs, in dessen Hohlraum Partikel des hochwärmeleitfähigen Materials, das Diamant und/oder kubisches Bornitrid umfasst, und/oder der mechanischen Legierung von dem Metall und/oder der Metalllegierung und Partikeln des hochwärmeleitfähigen Materials angeordnet sind, auf solche Weise, dass der Teil des Metall- und/oder Metalllegierungsdrahts- oder -rohrs, auf den die Wärmequelle einwirkt, abgeschmolzen wird und innerhalb eines vorbestimmten Bereichs eine zusammenhängende Matrix bildet, in der Partikel des hochwärmeleitfähigen Materials eingebettet sind, und anschließendes Abkühlenlassen;
4) Bereitstellen eines Pulverbetts aus pulverförmigen Partikeln des hochwärmeleitfähigen Materials, das Diamant und/oder kubisches Bornitrid umfasst, und eines Drahtes oder Stabs aus dem Metall oder der Metalllegierung, Einwirkenlassen einer Wärmequelle auf ein Ende des Drahts oder Stabs auf solche Weise, dass der Teil des Drahts oder Stabs, auf den die Wärmequelle einwirkt, abgeschmolzen wird und als Schmelze einen vorbestimmten Abschnitt des Pulverbetts aus dem hochwärmeleitfähigen Material infiltriert und dessen Partikel in Form einer zusammenhängenden Matrix umgibt, und anschließendes Abkühlenlassen.

3. Verfahren nach Anspruch 1 oder 2, **dadurch gekennzeichnet, dass** es das mindestens einmalige Aufbringen eines weiteren Schichtabschnitts des Verbundwerkstoffs durch den Schritt a) des Anspruchs 1 oder einen beliebigen Schritt der Schritte 1) bis 4) des Anspruchs 2 auf einer Basisschicht umfasst, welche einen zuvor aufgebrachten Schichtabschnitt des Verbundwerkstoffs umfasst.

4. Verfahren nach einem der Ansprüche 1 bis 3, **dadurch gekennzeichnet, dass** die Wärmequelle beweglich ist und der Schritt a) des Anspruchs 1 oder einer der Schritte 1) bis 4) des Anspruchs 2 auf derselben Basisschicht bei kontinuierlicher Leistungsabgabe der Wärmequelle fortlaufend bis zum Erreichen einer vorbestimmten Abmessung des Schichtabschnitts durchgeführt wird oder bei pulsförmiger Leistungsabgabe der Wärmequelle so häufig wiederholt wird, bis eine vorbestimmte Abmessung des Schichtabschnitts erzielt wird.

5. Verfahren nach einem der Ansprüche 1 bis 4, **dadurch gekennzeichnet, dass** das Metall aus Al, Cu, Ag, Au, Ti, Mg, Zn, Sn oder Fe ausgewählt ist und/oder die Metalllegierung Al, Cu, Ag, Au, Ti, Mg, Zn, Sn und/oder Fe umfasst.

6. Verfahren nach einem der Ansprüche 1 bis 4, **dadurch gekennzeichnet, dass** die Größe der Partikel des hochwärmeleitfähigen Materials, das Diamant und/oder kubisches Bornitrid umfasst, im Bereich von 60 bis 200 µm liegt.

7. Verfahren nach einem der Ansprüche 1 bis 6, **dadurch gekennzeichnet, dass** die Dicke der Schicht des hergestellten Verbundwerkstoffs 20 µm bis 2 mm beträgt.

8. Verfahren nach einem der Ansprüche 1 bis 7, **dadurch gekennzeichnet, dass** die Wärmequelle aus einem Laser, UV-Licht, einem Partikelstrahl, z.B. lonenstrahl, einem Elektronenstrahl und/oder einem Lichtbogen ausgewählt ist.

9. Verfahren nach einem der Ansprüche 1 bis 8, **dadurch gekennzeichnet, dass** die Diamant und/oder kubisches Bornitrid enthaltenden Partikel, die in dem hochwärmeleitfähigen Material enthalten sind, beschichtet sind, z.B. mit SiC oder AlN.

10. Verfahren nach einem der Ansprüche 1 bis 9, **dadurch gekennzeichnet, dass** der aufgebrachte Verbundwerkstoff ferner unter Atmosphärendruck oder Vakuum oder erhöhtem Druck wärmebehandelt wird.

11. Verfahren nach einem der Ansprüche 1 bis 9, **dadurch gekennzeichnet, dass** es bei Raumtemperatur oder teilweise oder ganz bei einer erhöhten Temperatur innerhalb von 30 bis 60% der Soliduslinie (°C) durchgeführt wird.

12. Verfahren zum Herstellen eines Verbundwerkstoffes, bestehend aus einem Metall und/oder einer Metalllegierung und Partikeln aus hochwärmeleitfähigem Material, das Diamant und/oder kubisches Bornitrid umfasst, welches den Schritt a) des Anspruchs 1 umfasst, und das anschließende Abtrennen jeglicher Basisschicht, die nicht aus dem Verbundwerkstoff besteht, umfasst, wobei in dem Fall, in dem das hochwärmeleitfähige Material kein kubisches Bornitrid umfasst, zumindest ein weiterer Schichtabschnitt aus Verbundwerkstoff auf einer Basisschicht, die den zuvor aufgebrachten Schichtabschnitt aus dem Verbundwerkstoff umfasst, aufgebracht wird.

13. Verfahren nach Anspruch 12, **dadurch gekennzeichnet, dass** das Verfahren die Schritte 1) bis 4) des Anspruchs 2 umfasst.

14. Verfahren nach Anspruch 12 oder 13, **dadurch gekennzeichnet, dass** das Verfahren eines oder mehrere der Verfahrensmerkmale der Ansprüche 3 bis 11 umfasst.

## Claims

1. Process for producing a component having increased thermal conductivity by layerwise construction, where at least one section of the component is built up by carrying out, at least once, a step which comprises at least the following:
a) applying a layer section having predetermined dimensions of a composite material composed of a metal and/or a metal alloy and particles of highly thermally conductive material which comprises diamond and/or cubic boron nitride in a predetermined region to a base layer by melting the metal or the metal alloy by means of a heat source in such a way that the metal and/or the metal alloy forms a contiguous matrix in which particles of the highly thermally conductive material are embedded within the predetermined dimensions and subsequently allowing the layer section to cool,
with the proviso that the metal is, insofar as it is not a constituent of the metal alloy, not selected from among the alkali metals and calcium, strontium, barium or radium,
**characterized in that** the size of the particles of the highly thermally conductive material which comprises diamond and/or cubic boron nitride is in the range from 6 µm to 250 µm, where the size distribution is bimodal or trimodal, the highly thermally conductive material consists of particles of diamond and/or cubic boron nitride which have been etched or roughened by oxidation and the proportion of the highly thermally conductive material in the composite material produced is from 40% by volume to 80% by volume.

2. Process according to Claim 1, **characterized in that** the application of the layer section to the base layer comprises one of the following steps 1) to 4) which comprise:
1) providing a powder bed composed of a mixture of pulverulent metal and/or metal alloy particles and particles of the highly thermally conductive material comprising diamond and/or cubic boron nitride and/or mechanically alloying the metal and/or the metal alloy and particles of the highly thermally conductive material on the base layer and melting the metal and/or the metal alloy in a subregion of the powder bed having predetermined dimensions by means of a heat source in such a way that the metal and/or the metal alloy forms a contiguous matrix in which particles of the highly thermally conductive material are embedded within the predetermined dimensions and subsequently allowing the layer to cool;
2) applying pulverulent metal and/or metal alloy particles and particles of the highly thermally conductive material comprising diamond and/or cubic boron nitride and/or a pulverulent mechanical alloy of the metal and/or the metal alloy and particles of the highly thermally conductive material by means of one or more nozzles to a predetermined region of the substrate and melting the metal and/or the metal alloy by means of a heat source in such a way that the metal and/or the metal alloy forms a contiguous matrix in which particles of the highly thermally conductive material are embedded within the predetermined dimensions and subsequently allowing the layer to cool;
3) allowing a heat source to act on one end of a hollow metal and/or metal alloy wire or tube in the hollow space of which particles of the highly thermally conductive material comprising diamond and/or cubic boron nitride and/or the mechanical alloy of the metal and/or the metal alloy and particles of the highly thermally conductive material are arranged in such a way that the part of the metal and/or metal alloy wire or tube on which the heat source acts is melted and forms a contiguous matrix in which particles of the highly thermally conductive material are embedded within a predetermined region and subsequently allowing the layer to cool;
4) providing a powder bed composed of pulverulent particles of the highly thermally conductive material comprising diamond and/or cubic boron nitride and a wire or rod of the metal or the metal alloy, allowing a heat source to act on one end of the wire or rod in such a way that the part of the wire or rod on which the heat source acts is melted and as melt infiltrates a predetermined region of the powder bed of the highly thermally conductive material and surrounds the particles of the powder bed in the form of a contiguous matrix and subsequently allowing the layer to cool.

3. Process according to Claim 1 or 2, **characterized in that** it comprises applying, at least once, a further layer section of the composite material by means of step a) of Claim 1 or any of the steps 1) to 4) of Claim 2 to a base layer which comprises a previously applied layer section of the composite material.

4. Process according to any of Claims 1 to 3, **characterized in that** the heat source is movable and step a) of Claim 1 and/or one of the steps 1) to 4) of Claim 2 is carried out continually on the same base with continuous power input from the heat source until a predetermined dimension of the layer section has been reached or in the case of pulsed power input from the heat source is repeated until a predetermined dimension of the layer section is achieved.

5. Process according to any of Claims 1 to 4, **characterized in that** the metal is selected from Al, Cu, Ag, Au, Ti, Mg, Zn, Sn or Fe and/or the metal alloy comprises Al, Cu, Ag, Au, Ti, Mg, Zn, Sn and/or Fe.

6. Process according to any of Claims 1 to 4, **characterized in that** the size of the particles of the highly thermally conductive material comprising diamond and/or cubic boron nitride is in the range from 60 to 200 µm.

7. Process according to any of Claims 1 to 6, **characterized in that** the thickness of the layer of the composite material produced is from 20 µm to 2 mm.

8. Process according to any of Claims 1 to 7, **characterized in that** the heat source is selected from a laser, UV light, a particle beam, e.g. ion beam, an electron beam and/or an electric arc.

9. Process according to any of Claims 1 to 8, **characterized in that** the particles which contain diamond and/or cubic boron nitride and are present in the highly thermally conductive material are coated, e.g. with SiC or AlN.

10. Process according to any of Claims 1 to 9, **characterized in that** the applied composite material is additionally heat treated under atmospheric pressure or reduced pressure or superatmospheric pressure.

11. Process according to any of Claims 1 to 9, **characterized in that** it is carried out at room temperature or partly or entirely at an elevated temperature within from 30 to 60% of the solidus line (°C).

12. Process for producing a composite material consisting of a metal and/or a metal alloy and particles composed of highly thermally conductive material comprising diamond and/or cubic boron nitride, which comprises step a) of Claim 1 and subsequently separating off any base layer which does not consist of the composite material, where in the case of the highly thermally conductive material not comprising cubic boron nitride at least one further layer section composed of composite material is applied to a base layer which comprises the previously applied layer section of the composite material.

13. Process according to Claim 12, **characterized in that** the process comprises steps 1) to 4) of Claim 2.

14. Process according to Claim 12 or 13, **characterized in that** the process comprises one or more of the process features of Claims 3 to 11.

## Revendications

1. Procédé de fabrication d'une pièce à haute conductibilité thermique par une construction stratifiée, dans lequel on construit au moins une partie de la pièce par l'exécution au moins une fois d'une étape, qui comprend les opérations suivantes:
a) déposer une partie de couche ayant des dimensions prédéterminées d'un matériau composite constitué d'un métal et/ou d'un alliage métallique et de particules en matériau à haute conductibilité thermique, qui comprend du diamant et/ou du nitrure de bore cubique, dans une région prédéterminée sur une couche de base par fusion du métal ou de l'alliage métallique au moyen d'une source de chaleur, de telle manière que le métal et/ou l'alliage métallique forment à l'intérieur des dimensions prédéterminées une matrice continue, dans laquelle des particules du matériau à haute conductibilité thermique sont noyées, et ensuite la laisser refroidir,
avec la condition que le métal, dans la mesure où il ne fait pas partie de l'alliage métallique, ne soit pas sélectionné parmi les métaux alcalins et le calcium, le strontium, le baryum ou le radium,
**caractérisé en ce que** la taille des particules du matériau à haute conductibilité thermique, qui comprend du diamant et/ou du nitrure de bore cubique, se situe dans la plage de 6 µm à 250 µm, dans lequel la distribution des tailles est bimodale ou trimodale, dans lequel le matériau à haute conductibilité thermique se compose de particules en diamant et/ou en nitrure de bore cubique, qui ont été attaquées ou dépolies par oxydation, dans lequel la proportion du matériau à haute conductibilité thermique dans le matériau composite fabriqué vaut 40 % en volume à 80 % en volume.

2. Procédé selon la revendication 1, **caractérisé en ce qu'**il comprend le dépôt de la partie de couche sur la couche de base par une des étapes suivantes 1) à 4), qui comprennent:
1) préparer un lit de poudre composé d'un mélange de particules de métal et/ou d'alliage métallique en poudre et de particules du matériau à haute conductibilité thermique, qui comprend du diamant et/ou du nitrure de bore cubique, et/ou un alliage mécanique du métal et/ou de l'alliage métallique et de particules du matériau à haute conductibilité thermique sur la couche de base et fondre le métal et/ou l'alliage métallique dans une région partielle du lit de poudre avec des dimensions prédéterminées au moyen d'une source de chaleur, de telle manière que le métal et/ou l'alliage métallique forment à l'intérieur des dimensions prédéterminées une matrice continue, dans laquelle des particules du matériau à haute conductibilité thermique sont noyées, et ensuite la laisser refroidir;
2) ajouter des particules de métal et/ou d'alliage métallique en poudre et des particules du matériau à haute conductibilité thermique, qui comprend du diamant et/ou du nitrure de bore, et/ou un alliage mécanique pulvérulent du métal et/ou de l'alliage métallique et de particules du matériau à haute conductibilité thermique au moyen d'une ou de plusieurs buse(s) sur une région prédéterminée du support et fondre le métal et/ou l'alliage métallique au moyen d'une source de chaleur, de telle manière que le métal et/ou l'alliage métallique forment à l'intérieur des dimensions prédéterminées une matrice continue, dans laquelle des particules du matériau à haute conductibilité thermique sont noyées, et ensuite la laisser refroidir;
3) faire agir une source de chaleur sur une extrémité d'un fil ou d'un tube creux en métal et/ou en alliage métallique, dans l'espace creux duquel des particules du matériau à haute conductibilité thermique, qui comprend du diamant et/ou du nitrure de bore cubique, et/ou du mélange mécanique du métal et/ou de l'alliage métallique et de particules du matériau à haute conductibilité thermique, sont disposées, de telle manière que la partie du fil ou du tube en métal et/ou en alliage métallique, sur laquelle la source de chaleur agit, soit fondue et forme à l'intérieur d'une région prédéterminée une matrice continue, dans laquelle des particules du matériau à haute conductibilité thermique sont noyées, et ensuite la laisser refroidir;
4) préparer un lit de poudre composé de particules pulvérulentes du matériau à haute conductibilité thermique, qui comprend du diamant et/ou du nitrure de bore cubique, et un fil ou une barre du métal et/ou de l'alliage métallique, faire agir une source de chaleur sur une extrémité du fil ou de la barre, de telle manière que la partie du fil ou de la barre, sur laquelle la source de chaleur agit, soit fondue et s'infiltre sous forme de masse fondue dans une partie prédéterminée du lit de poudre composé du matériau à haute conductibilité thermique et entoure ses particules sous la forme d'une matrice continue, et ensuite la laisser refroidir.

3. Procédé selon la revendication 1 ou 2, **caractérisé en ce qu'**il comprend le dépôt au moins unique d'une autre partie de couche du matériau composite selon l'étape a) de la revendication 1 ou une étape quelconque des étapes 1) à 4) de la revendication 2 sur une couche de base, qui comprend une partie de couche du matériau composite déposée antérieurement.

4. Procédé selon l'une quelconque des revendications 1 à 3, **caractérisé en ce que** la source de chaleur est mobile et on exécute l'étape a) de la revendication 1 ou une des étapes 1) à 4) de la revendication 2 sur la même couche de base avec production continue de puissance de la source de chaleur de façon continue jusqu'à atteindre une dimension prédéterminée de la partie de couche ou on la répète avec production puisée de puissance de la source de chaleur plusieurs fois jusqu'à ce qu'une dimension prédéterminée de la partie de couche soit atteinte.

5. Procédé selon l'une quelconque des revendications 1 à 4, **caractérisé en ce que** le métal est sélectionné parmi Al, Cu, Ag, Au, Ti, Mg, Zn, Sn ou Fe et/ou l'alliage métallique comprend Al, Cu, Ag, Au, Ti, Mg, Zn, Sn et/ou Fe.

6. Procédé selon l'une quelconque des revendications 1 à 4, **caractérisé en ce que** la taille des particules du matériau à haute conductibilité thermique, qui comprend du diamant et/ou du nitrure de bore cubique, se situe dans la plage de 60 à 200 µm.

7. Procédé selon l'une quelconque des revendications 1 à 6, **caractérisé en ce que** l'épaisseur de la couche du matériau composite fabriqué vaut 20 µm à 2 mm.

8. Procédé selon l'une quelconque des revendications 1 à 7, **caractérisé en ce que** la source de chaleur est sélectionnée parmi un laser, une lumière UV, un faisceau de particules, par exemple un faisceau d'ions, un faisceau d'électrons et/ou un arc électrique.

9. Procédé selon l'une quelconque des revendications 1 à 8, **caractérisé en ce que** les particules contenant du diamant et/ou du nitrure de bore cubique, qui sont contenues dans le matériau à haute conductibilité thermique, sont revêtues, par exemple avec du SiC ou du AlN.

10. Procédé selon l'une quelconque des revendications 1 à 9, **caractérisé en ce que** le matériau composite déposé est en outre traité thermiquement à la pression atmosphérique, sous vide ou sous pression accrue.

11. Procédé selon l'une quelconque des revendications 1 à 9, **caractérisé en ce qu'**on l'exécute à la température ambiante ou partiellement ou entièrement à une température accrue située à l'intérieur de 30 à 60 % de la courbe de solidus (°C).

12. Procédé de fabrication d'un matériau composite, se composant d'un métal et/ou d'un alliage métallique et de particules d'un matériau à haute conductibilité thermique, qui comprend du diamant et/ou du nitrure de bore cubique, qui comprend l'étape a) de la revendication 1, et qui comprend la séparation ultérieure de chaque couche de base qui ne se compose pas du matériau composite, dans lequel, dans le cas où le matériau à haute conductibilité thermique ne comprend pas de nitrure de bore cubique, on dépose au moins une autre partie de couche en matériau composite sur une couche de base, qui comprend la partie de couche en matériau composite déposée antérieurement.

13. Procédé selon la revendication 12, **caractérisé en ce que** le procédé comprend les étapes 1) à 4) de la revendication 2.

14. Procédé selon la revendication 12 ou 13, **caractérisé en ce que** le procédé comprend une ou plusieurs des caractéristiques de procédé des revendications 3 à 11.
